(19) Europäisches Patentamt

European Patent Office

Office européen des brevets

(11) EP 0 754 880 A2

(12) EUROPEAN PATENT APPLICATION

(43) Date of publication:
22.01.1997 Bulletin 1997/04

(51) Int Cl.⁶: **F16H 21/18**

(21) Application number: 96830181.2

(22) Date of filing: 29.03.1996

(84) Designated Contracting States:
DE ES FR GB IT NL SE

(30) Priority: 19.07.1995 IT RM950495

(71) Applicant: **Lanucara, Ubaldo**
**00124 Casal Palocco, Roma (IT)**

(72) Inventor: **Lanucara, Ubaldo**
**00124 Casal Palocco, Roma (IT)**

(74) Representative: **Iannone, Carlo Luigi et al**
**Ing. Barzanò & Zanardo Roma S.p.A.**
**Via Piemonte, 26**
**00187 Roma (IT)**

(54) **Crank mechanism system for interconverting rotary motion and reciprocating harmonic rectilinear motion**

(57)     The invention relates to a mechanism for the reversible transfer of energy by the transformation of rotary motion into reciprocating harmonic rectilinear motion and vice versa, comprising a member (2), axially constrained to a solid support (1), rotating about its longitudinal axis, at least a crank element (4) rigidly coupled with said rotating member (2) and having its longitudinal axis parallel and not coincident with respect to the axis of said rotating member (2), and means (5, 6, 7) for the transformation of the rotating motion into reciprocating harmonic motion, and vice versa, said means being movable within the solid support (1), integral with said crank (4); to said means (5, 6, 7) for the transformation of the rotating motion into rectilinear motion at least two movable elements (7), slidable within sliding constraints (11) being coupled.

FIG. 6

EP 0 754 880 A2

**Description**

The present invention relates to a crank mechanism for the reversible transfer of energy by the transformation of rotary motion into reciprocating harmonic rectilinear motion and vice versa.

More particularly, the invention relates to a system of the above kind having a minimum number of components, self-balanced, with a double stroke.

The crank mechanism according to the invention is included among the crank mechanisms employed to generate the motion to realise reciprocating volumetric operative or motive machines.

The solution according to the invention has the same functional parts of the universally known systems comprising connecting rod and crank, but has a lower number of structural parts.

The system suggested according to the present invention is the natural development of the traditional system, since from its geometry, on the basis of the motion law and of the accelerations of the masses according to the reciprocating sliding directrix, a theoretical maximum efficiency, a complete dynamic self-balancing during the idling and a remarkable easy of realisation.

From the following specification, the substantial differences with respect to the traditional crank mechanism will be understood.

Among the advantages which can be obtained by the solution according to the present invention, the following can be cited:

a) kinematic efficiency almost equal to one. In the known crank mechanism, the so called $\varphi$ angle between the longitudinal axis of the connecting rod and the piston sliding line, which apart from the dead centres, is always different from zero, so determining a reduction of the operative vector, said reduction in the known crank mechanisms can be more than 10% of the energy transferred for any rotation cycle. The geometry of the crank mechanism system according to the invention instead shows that it completely transfers the energy in the two kind of exploitation (from rotary into reciprocating motion and vice versa), without obviously taking into consideration the functional passivity;

b) assuming only one crank mechanism put into rotation with a constant angular velocity $\omega$ around its shaft and exploiting - as it will be shown - the system according to two linear directrixes orthogonal each other, no resultant of inertial stresses - in case the relevant vectors are projected on an orthogonal with respect to the longitudinal axis of the crank mechanism - due to the accelerations of the masses (assuming that they are the same) of two elements movable according to a reciprocating harmonic motion, since it is demonstrated that the two motions, offset of $\pi/2$ completely annul in any phase of the cycle; the only element of which must be provided the balancing in order to zero the centripetal stresses on the bearings is the same, obviously beside the further masses for the dynamic compensation of the active or passive, thermodynamic variable forces;

c) the minimum diameter of the pistons, lacking the device of a connecting rod provided with a complex motion and internally tilting, can be freely chosen. The crank mechanism system according to the invention further imposes a double stroke of the sliders at parity of rotation radius of the crank;

d) each movable element can rigidly support two aligned and opposed pistons acting within aligned and opposite chambers. In this way the mechanical stresses acting along oppositely aligned directrixes are partially eliminated on the relevant support structure, considering for example a two-stroke motive machine, while in the known systems the stresses act only along different sliding planes;

e) the geometry of the system according to the invention is such that the stresses acting on the crank lean to concentrate in a rotating thrust couple, said couple being unchanged when the harmonic motion sliding directrixes are more than two;

f) the crank system according to the known technique is based, apart from those of the cross head kind, only on one linear sliding restraint, a cylindrical chamber within which the piston slides; in the crank system according to the invention, these restraints can be freely increased, with a remarkable reduction of the unitary stresses, that in this case are nominally greater, as well as the relative sliding speed between the parts;

g) only one crank can manage within suitable spaces each number of groups of two directrixes of harmonic motion, with any inclination angle each other, on condition that they are not coincident. For sake of clarity, in the following description it will be often made reference to orthogonal trajectories, but this must be not unduly used as limitative and binding;

h) the equations individuating the position of the movable element barycentre along the co-ordinated axis, in function of rotation $\alpha$ angle of the crank, are sinusoidal, so that the calculations are easy and the integrals exact;

i) remarkably increasing the number of rectilinear trajectories, the working of the crank system according to the invention can prescind from the use of a fly-wheel having remarkable dimensions;

j) the functions of all the connecting rods and of all the gudgeons are performed by a sole structural element.

It is therefore specific object of the present invention a crank mechanism for the reversible transfer of energy by the transformation of rotary motion into reciprocating harmonic rectilinear motion and vice versa, comprising a member, axially constrained to a solid support, rotating about its longitudinal axis, at least a crank rigidly coupled with said member and having its longitudinal axis parallel and not coincident with respect to the axis of said rotating member, and means for the transformation of the rotating motion into reciprocating harmonic motion, and vice versa, said means being movable within the solid support, integral with said crank; to said means for the transformation of the rotating motion into rectilinear motion at least two movable elements being coupled.

Preferably, according to the invention, said rotating member is made up of a one or two throw shaft, or by a cantilevered crank.

The above mentioned transformation of the motion from rotating motion into reciprocating rectilinear motion, and vice versa, occurs by a rigid element, axially constrained to the crank, in said element being fixed at least two fixed different and not superimposable points, in case these points are projected on a plane orthogonal with respect to the longitudinal axis of the crank, said points being each spaced apart from said axis of an amount corresponding to the rotation axis of the same crank. In correspondence of said fixed points, two pins are integral with the rigid element, said pins being placed side by side and acting on different and never interfering sliding planes, and having the longitudinal axis parallel with respect to the axis of the crank and incident on the relevant fixed point. Providing within the sump constraints for the linear sliding of two movable elements, axially constrained with the respective pins, and the longitudinal sliding directrix of which intersects the rotation axis of the rotating member, making the crank rotating, said pins, according to a well known geometrical law, along with the respective movable elements will make linear ranges corresponding to four times the rotation radius of the same crank, alternatively running along the linear sliding constraints, passing through positions defined by a harmonic function of the crank rotation angle $\alpha$, said positions being offset each other, each point being different and separated from the other similar points.

Said pins have the same functions of the gudgeons provided in a traditional crank mechanism with connecting rod and crank.

The pins, centred with respect to the fixed points of the rigid element, of which they can be the structure and at the end they can be the only functional block, are sized in such a way that their outer circumference circumscribes the circumference of the crank, so that they are always partially superimposable and coupled face to face, the common surface being sufficiently extended to allow to both the complete housing of the axial constraint with the same crank. The deformable and sole assembly of a stack of two or more pins of this kind can functionally be the same rigid element.

A rigid element can be comprised by each number of pins, so oriented that at least two of them cannot be completely superimposed if, when considered identical, they are projected on a plane normal with respect to the crank longitudinal axis.

The present invention will be now described for illustrative but not limitative purposes, according to its preferred embodiments, with particular reference to the figures of the enclosed drawings, wherein:

figure 1 is a partially sectioned perspective view of the support solid, of the sliding constraints of the two movable elements (not shown), and of the rotating member provided with crank and axial constraints to be considered integral with the rotating member;
figure 2 is a perspective view similar to the preceding one, with the add of the two pins comprising the block of the rigid member;
figure 3 is a perspective view similar to the previous one, with the add of two movable elements comprising the bushings and the sliding rods;
figures 4a and 4b diagramatically show, in different positions, the basic operation of the crank mechanism according to the present invention;
figures 5a and 5b diagramatically show the operation principle of the crank mechanism, making reference to the main forces;
figure 6 is an exploded perspective view of the crank mechanism without the support solid;
figure 7 shows some stages of the operation of the crank mechanism;
figure 8 is a plan diagrammatic view of the crank system;
figure 9 is a plan schematic view of a first modification of the crank system; and
figure 10 is a schematic view of a second modification of the crank system;
figures 11a and 11b are top views of a simple embodiment of the crank system of figures 1 - 8 in different positions.

It must at first underlined that in the following only some of the many conceivable embodiments will be described on the basis of the basic solution of the present invention.

In the different figures, the corresponding parts will be indicated by the same reference numbers.

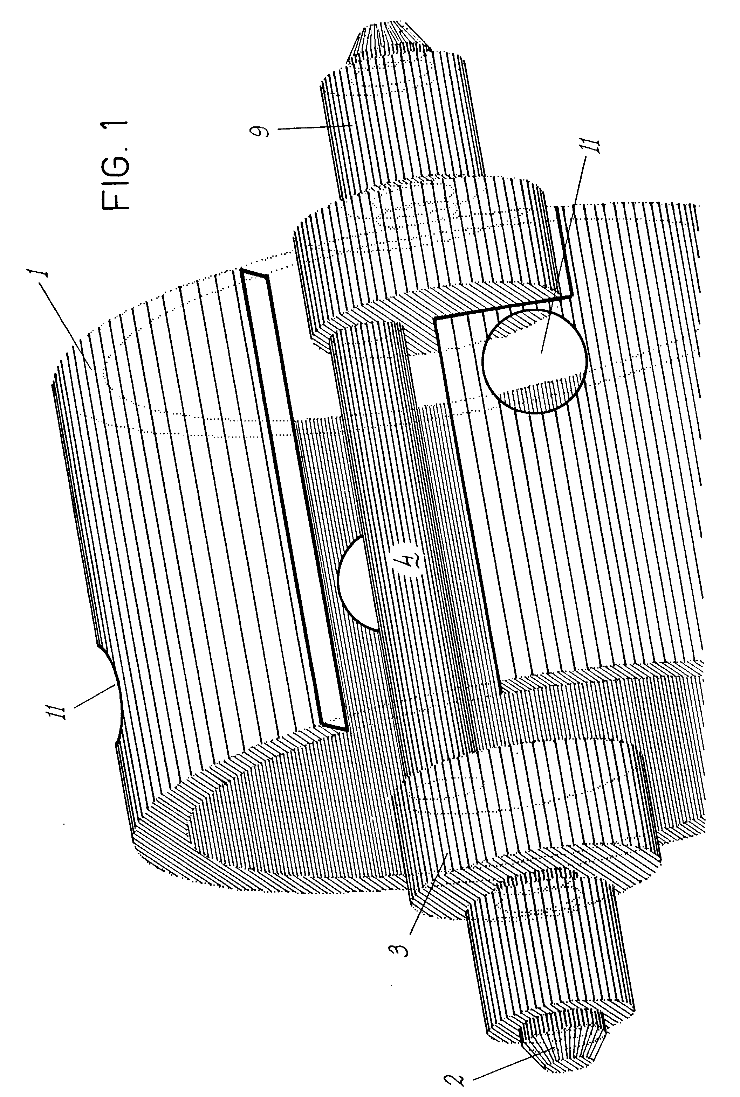

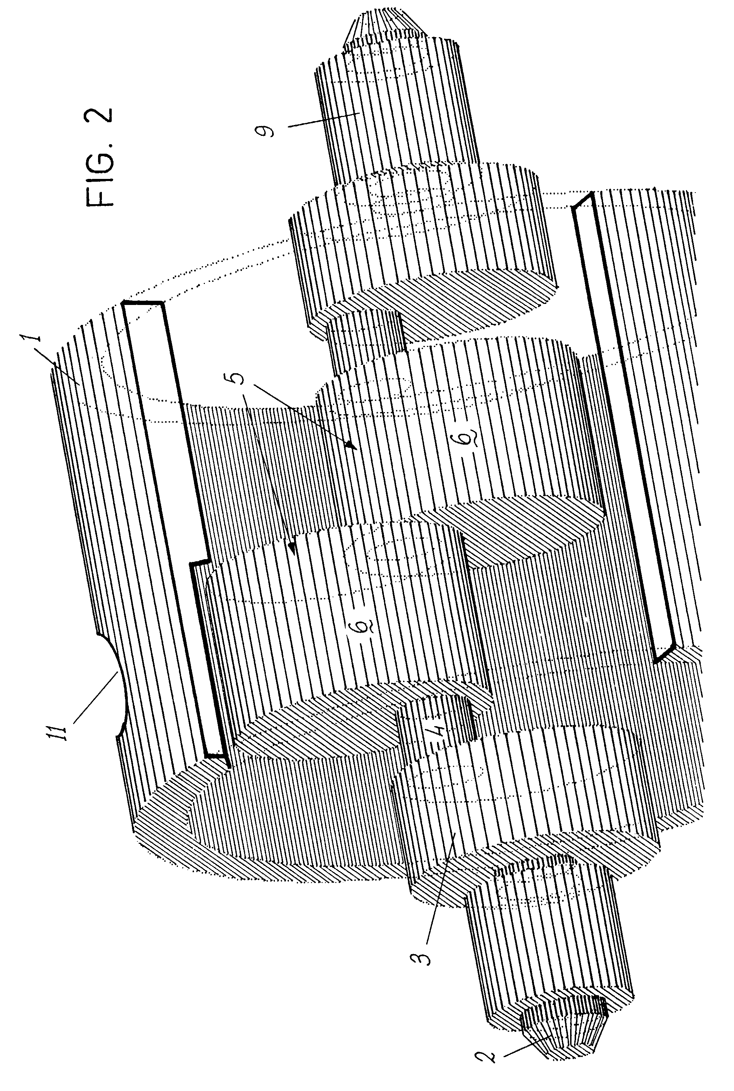

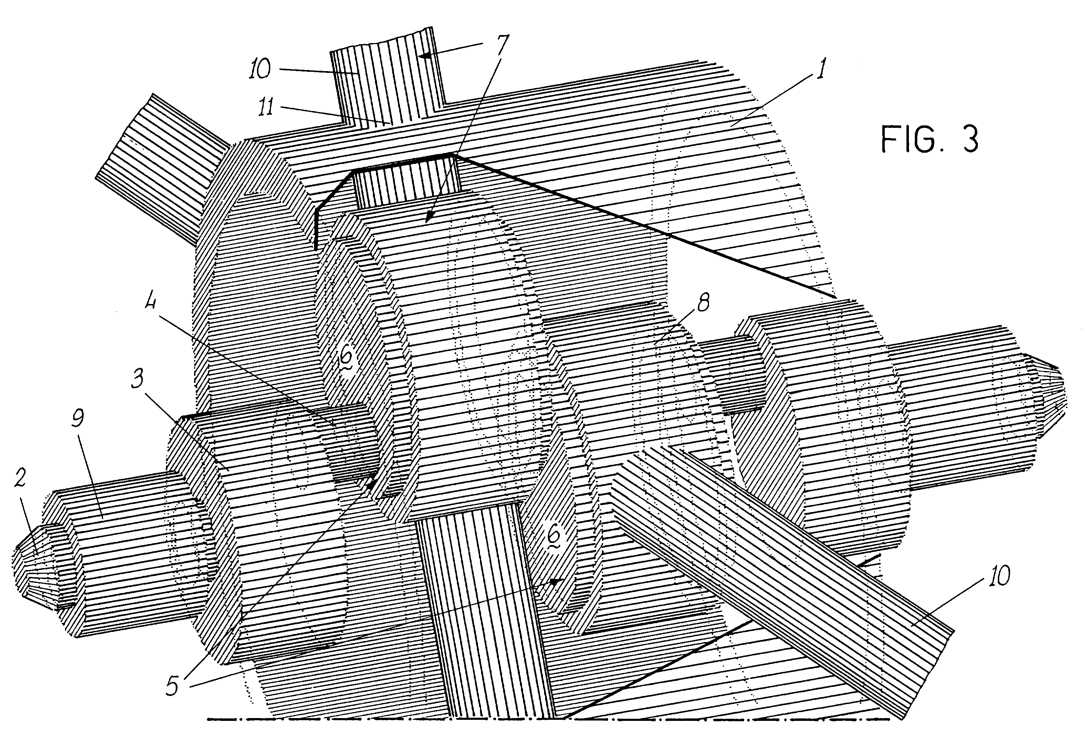

Making first reference to the perspective figures 1 - 3, a crank system according to the invention is shown, said system comprising a sump 1, an elbow shaft 2, comprising the axial support constraints 9, which should be considered as making part of the sump, the supports 3, a crank 4, the rigid element 5 comprised of the pins 6, the movable elements 7 comprised of the bushings 8 and of the sliding rods 10 within the respective constraints 11.

Sump 1 is integral with the viewer observation system, therefore, being the support axial constraints 9 of the elbow shaft 2 integral with the sump, the shaft is coaxially constrained to the same reference system. The longitudinal symmetry axis of each pin 6 is spaced from the corresponding one of the crank 4 of a distance corresponding to the rotation radius of the same crank.

The rigid element 5 is comprised of two pins 6, the longitudinal symmetry axis of which are on a plane comprising also the plane of the crank 4. Axially constraining to the pins the bushings 8 with the rods 10 housed within the sliding constraints 11, when the crank rotates about the longitudinal axis of the elbow shaft 2, the two pins, along with the respective movable elements comprised of the bushings and the rods, are obliged to cover reciprocating harmonic rectilinear trajectories, orthogonal each other, having a length corresponding to four times the rotation radius of the crank in function of the angle $\alpha=\omega t$, $\omega$ being the constant angular speed of the crank, offset each other of $\pi/2$.

Every number of pins 6, with any angular position, can be axially constrained to the crank 4, provided that at least two of them cannot be superimposed if, considering them identical, they are projected on a plane orthogonal to the longitudinal axis of the crank.

In the example shown, the orthogonality of the two linear trajectories imposes to the pins the coplanar lying of their longitudinal axis with respect to the analogous of the crank.

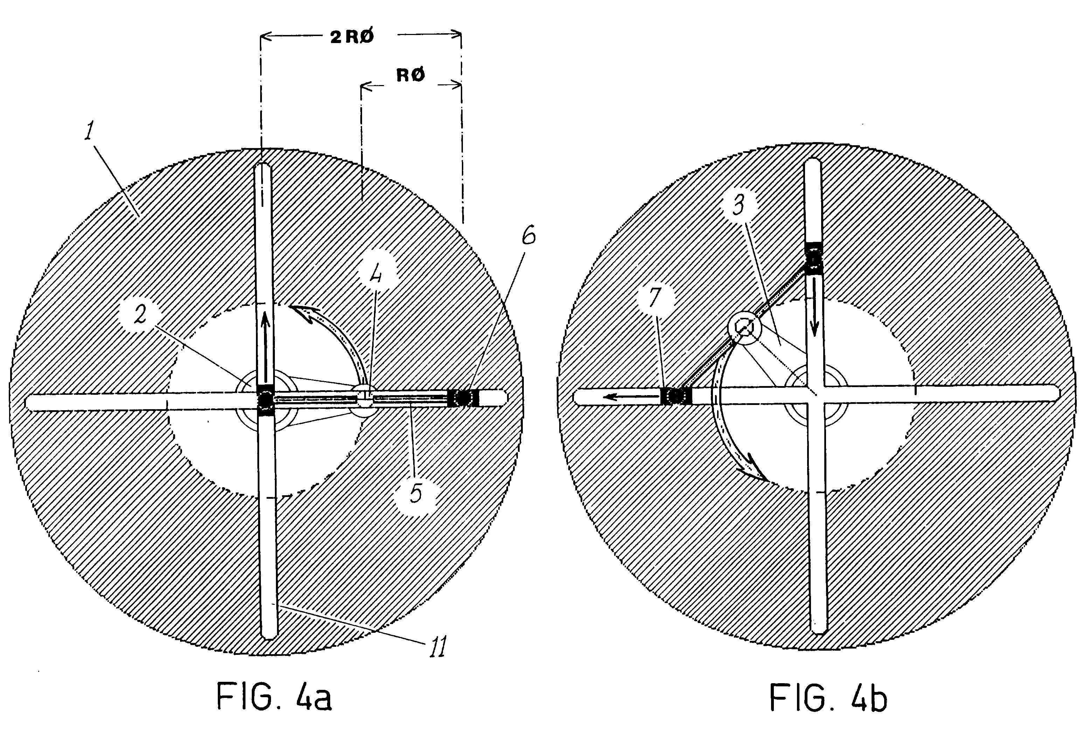

In figure 4 it can be observed the scheme of the origin of the motion in the subject crank mechanism, in two different positions: in figure 4a, crank 4 is at the beginning of the rotation cycle, and since the sliding constraints 11 are orthogonal each other, the longitudinal axes of the pins 6 are coplanar with the axis of the crank. The diameter of the pins are such that they do not enclose the radial section of the crank, so that it is schematically indicated the rigid element 5 supporting its ends, axially constrained to the movable elements 7. In figure 4b it can be noted that when the crank rotates, the movable elements are always in positions having a relation with sine and cosine of the rotation angle of the same crank. The range of each movable element at the end of the first 180° is double with respect to the rotation diameter of the crank, while at the end of 360°, the two movable elements, axially constrained to the pins, will be at the starting point to be able to infinitely repeat the cycle.

In the following, it will be demonstrated that, in case the joint of the axes of at least two pins 6 with the crank 4 axis divide the angle centred on the same crank into sectors of equal angular anomalies, the inertial stresses due to the accelerations of the movable masses in any moment of the cycle, annul each other completely.

It will be also demonstrated that the rotation energy of the rotating member 2 is theoretically completely transferred to the movable elements 7 in a reciprocating way, and vice versa.

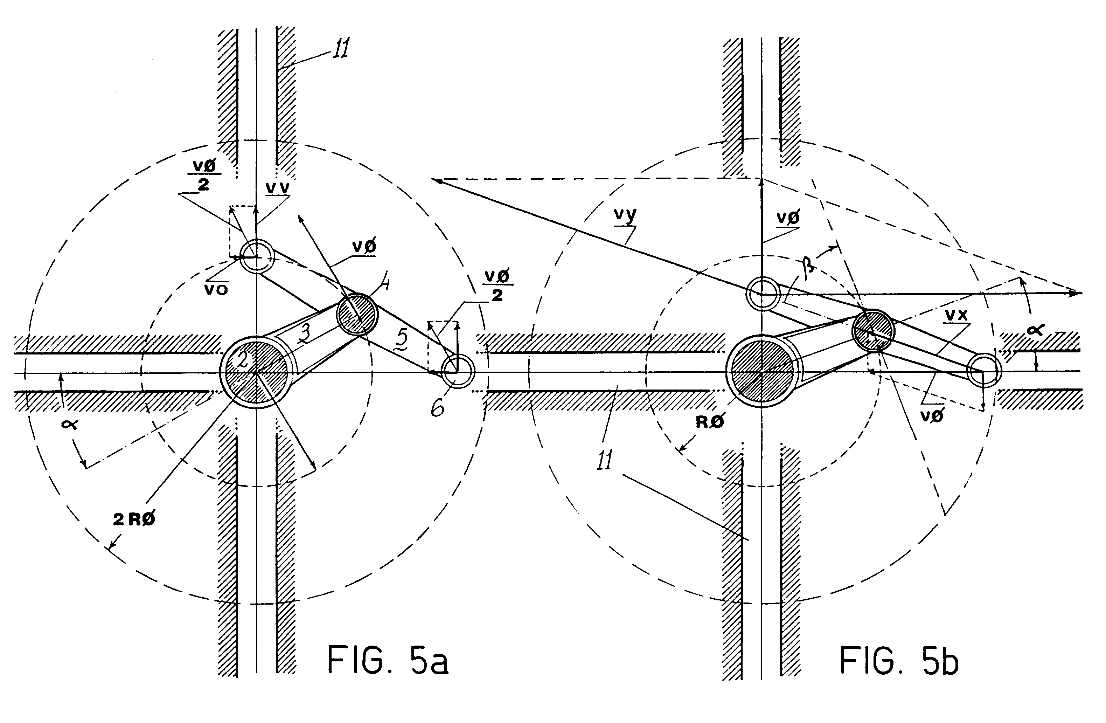

In figure 5 two illustrative schemes can be noted finalised to the analysis of the forces involved. For sake of clarity of representation, the diameters of the pins 6 are not sized in such a way to circumscribe the radial section of the crank 4. Figure 5a diagramatically shows the operation of the crank according to the present invention in a operative machine. The rotational torque vector VØ, transferred from the elbow shaft 2, is always tangential to the rotation circumference of the crank and the rigid element 5 is considered as an oscillating beam loaded in the middle, discharging by the pins on the sliding constraints 11. Figure 5b shows the same machine, but in this case it is a motive machine, having two constant vectors VØ always acting in the same direction of the advancement motion of the pins and aligned according to the sliding constraints. The analytical description of the argument will be given in the following.

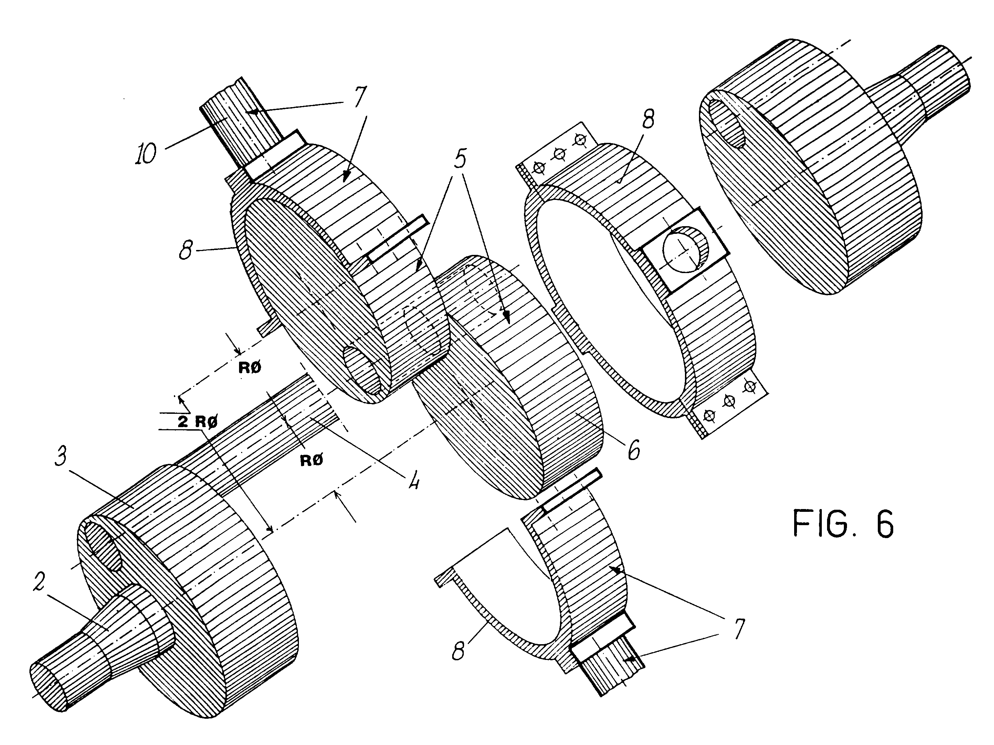

In figure 6 it is evident the assembly of some parts, basic for the subject crank mechanism, in the preferred embodiments according to the preceding figures. Rods 10 of one of the movable elements 7 have not been put into evidence, as well as the sliding constraints.

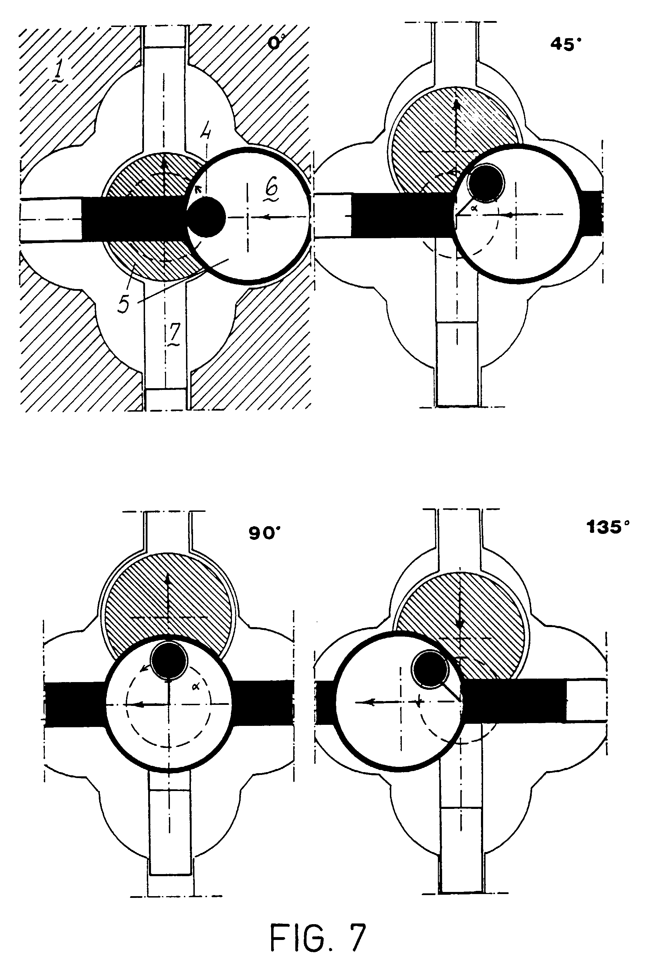

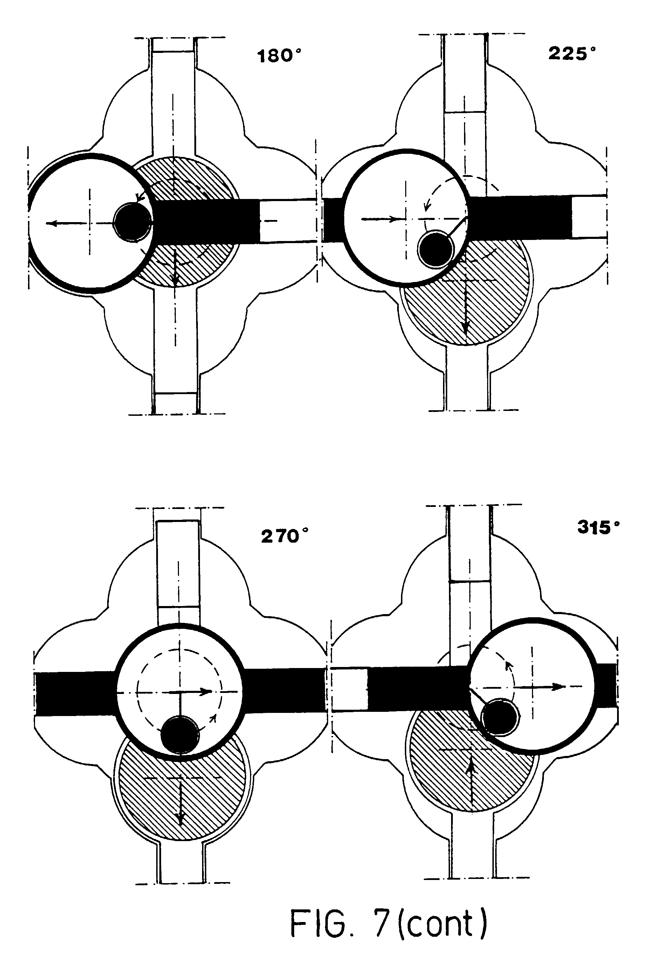

In the scheme of figure 7, pins 6 are sized in such a way to enclose the radial section of the crank 4, thus obtaining a progressive configuration, from left end toward right end and for above toward the bottom, of the rotation of the same crank with advancement of 45° from the start of the cycle. It is put into evidence the linear motion of pins and movable elements 7 axially constrained to said pins, within the sliding constraints 11.

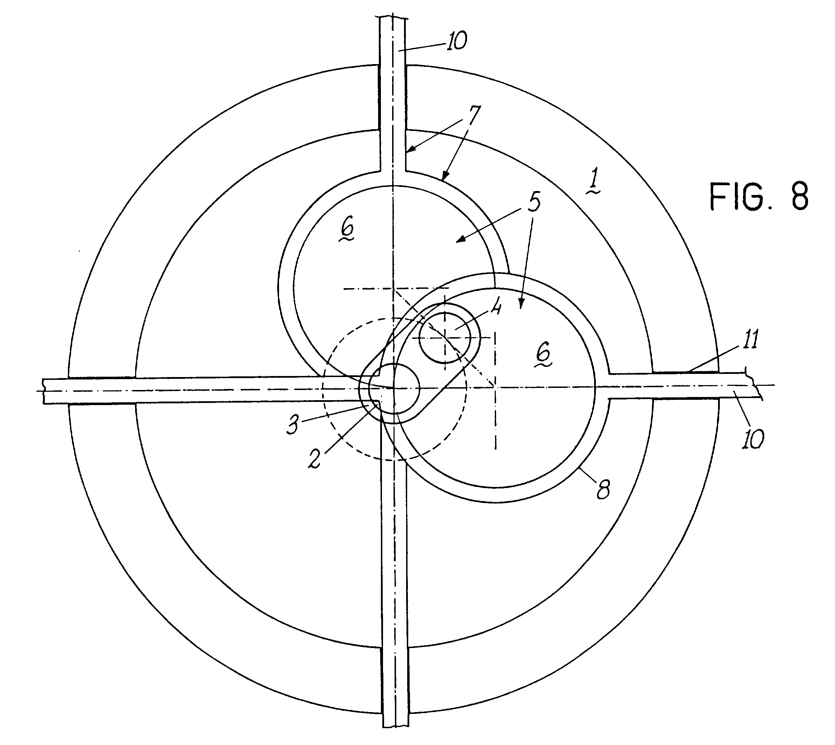

In figure 8 it is put into evidence the realisation scheme of the crank mechanism provided with sliding constraints 11 orthogonal each other, therefore with the longitudinal axes of the pins 6 co-planar with respect to the crank 4 axis.

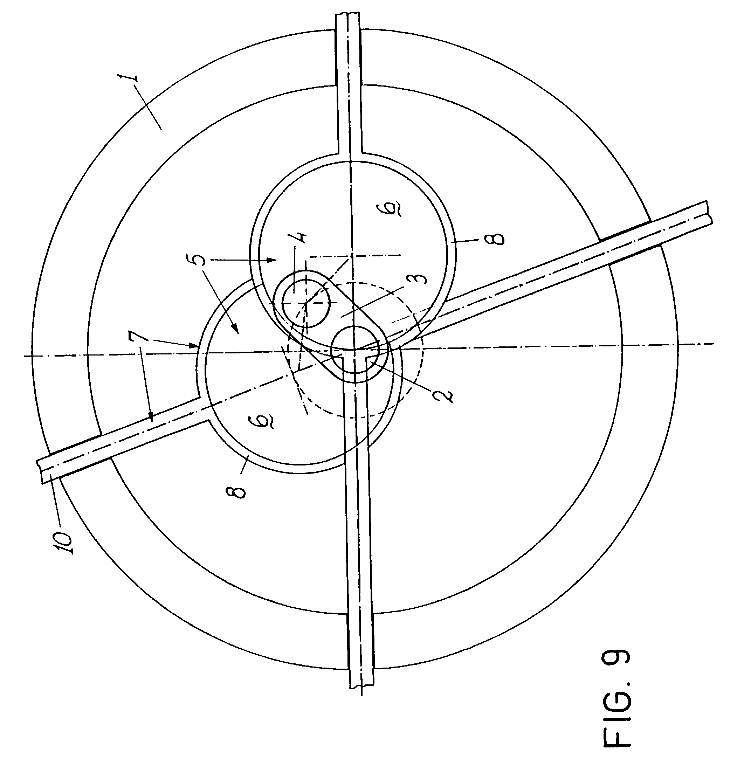

In figure 9, it is put into evidence the realisation scheme of the subject crank mechanism provided with sliding constraints 11, not orthogonal each other, therefore having the longitudinal axes of the pins 6 not co-planar with respect to the crank 4 axis.

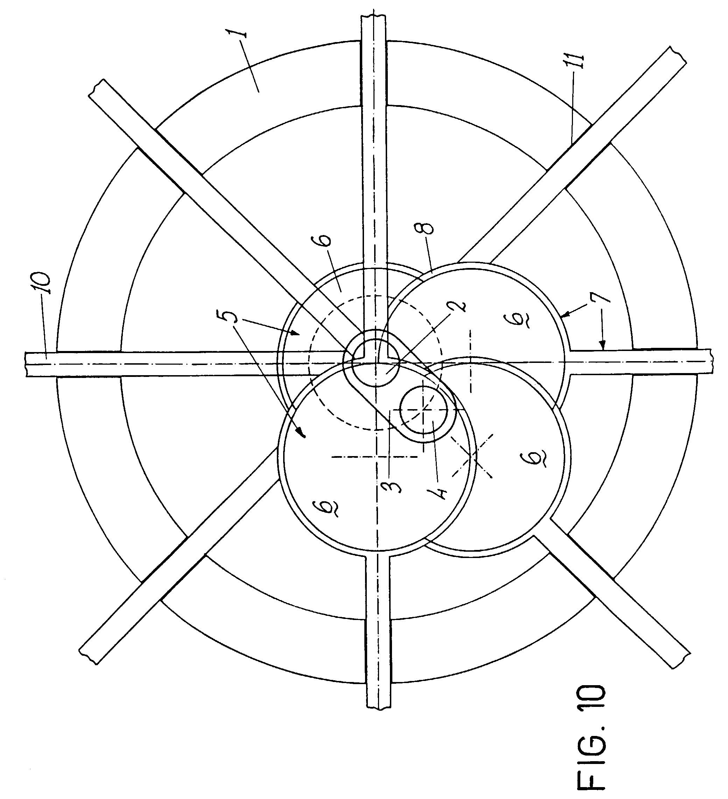

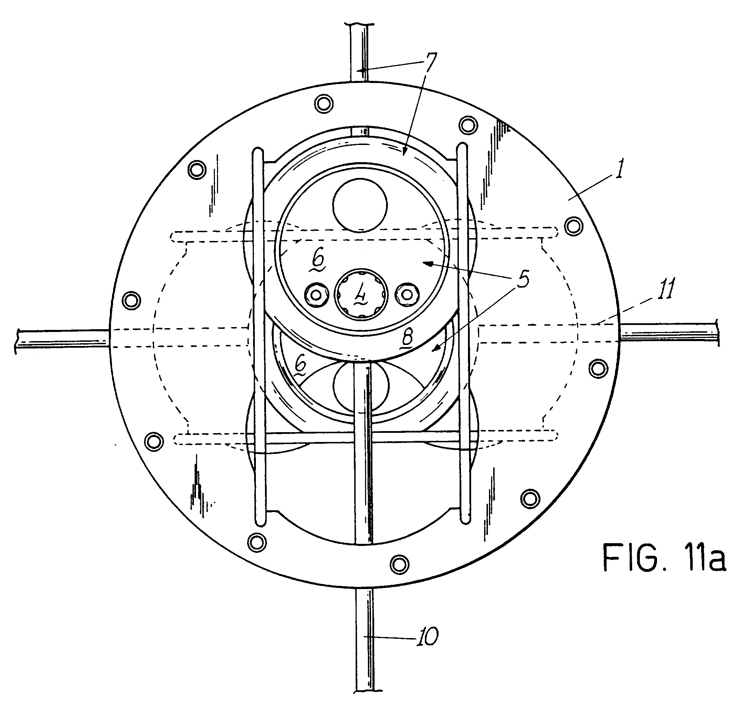

In figure 10 it is put into evidence the realisation scheme of the subject crank mechanism provided with four sliding constraints 11, provided at the same angulation each other, corresponding to two pairs of orthogonal constraints, disposed at an angle of 45°. The corresponding pins 6 forms two pairs each having the longitudinal axes co-planar with respect to the crank 4 axis.

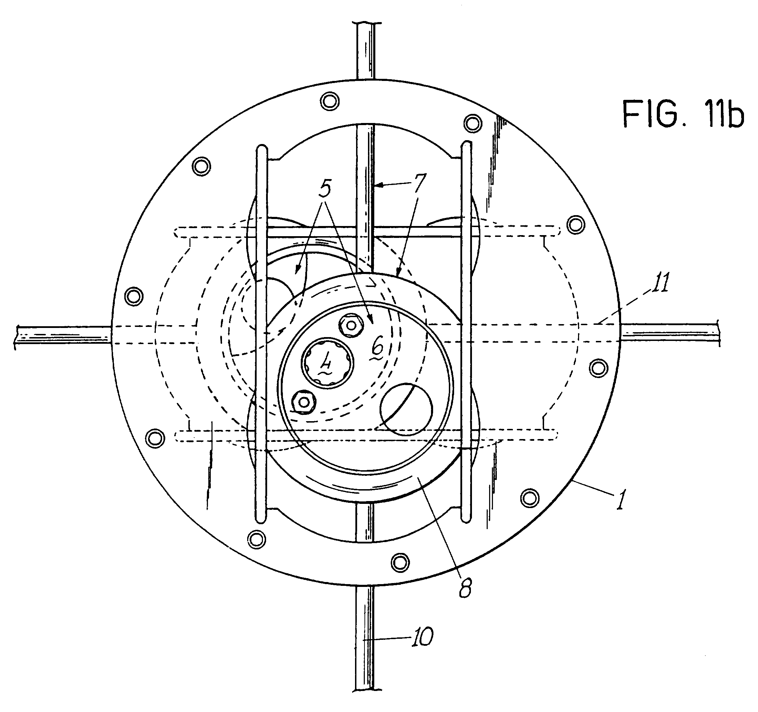

Figures 11a and 11b show in different positions a realisation of a machine employing the mechanism according to the invention. References are those already known. The sliding constraints 11 are divided among the rod 10 seats and surfaces parallel with respect to the sliding plane of the movable element 7, said surfaces being flat in view of bushings 8, to increase the resistance to the stresses deviated by the rotating action of crank 4.

In order to verify the complete transfer of energy in an operative machine employing the crank system according to the present invention, it must be considered, observing figure 5a, the rigid element 5 as a beam loaded in the middle by the rotational torque vector VØ, discharging the hemi vectors VØ, parallel with respect to the rotational torque vector, on the resting pins 6 travelling along the horizontal and vertical constraints.

Theoretical work LT of a rotational torque about an axis at a distance RØ is:

$$LT = 2*\pi*V\!\!\!\!/\!O*R\!\!\!\!/\!O$$

We shall take into consideration the horizontal and vertical components of VØ/2, i.e.:

$$VO = \frac{V\!\!\!\!/\!O}{2} *sen(\alpha)$$

$$VV = \frac{V\!\!\!\!/\!O}{2} *cos(\alpha)$$

The equation of motion of the sliders within the guide is known:

$$X = 2*R\!\!\!\!/\!O*cos(\alpha)$$

$$Y = 2*R\!\!\!\!/\!O*sen(\alpha)$$

Being it necessary to employ for the integrals, the differentials of X and Y, horizontal and vertical vectors will be defined in function respectively of cos($\alpha$) and sen($\alpha$):

$$VO = \frac{V\!\!\!\!/\!O}{2}*\sqrt{1\text{-}cos^2(\alpha)} = \frac{V\!\!\!\!/\!O}{4*R\!\!\!\!/\!O} *(4*R\!\!\!\!/\!O^2 - X^2)$$

$$VV = \frac{V\!\!\!\!/\!O}{2}*\sqrt{1\text{-}sen^2(\alpha)} = \frac{V\!\!\!\!/\!O}{4*R\!\!\!\!/\!O} *(4*R\!\!\!\!/\!O^2 - Y^2)$$

Two vectors aligned with the guides have been obtained, in function of co-ordinates X and Y. the two vectors can be integrated along a single run (corresponding to half turn of crank) for the calculation of the total work LT.

$$\frac{LT}{2} = \frac{V\!\!\!\!/\!O}{4*R\!\!\!\!/\!O} * \int_{2R\!\!\!/\!O}^{-2R\!\!\!/\!O} 4*R\!\!\!\!/\!O^2 - X^2 *dX + \frac{V\!\!\!\!/\!O}{4*R\!\!\!\!/\!O} * \int_{2R\!\!\!/\!O}^{-2R\!\!\!/\!O} 4*R\!\!\!\!/\!O^2 - Y^2 *dY$$

Solving integral and multiplying for 2, the same value of LT is obtained.

It is also immediate to verify the reversibility of the use of the device for a motive machine. It must be observed the scheme of figure 5b.

Vectors VØ determines reactions perpendicular with respect to the sliding lines, reactions completely absorbed by the relevant constraints.

The total work of the two vectors VØ is, for a complete cycle:

$$LT = 2*V\!\!\!\!/\!O*8*R\!\!\!\!/\!O$$

Now, the constraining linear reactions with the rigid element 5 will be taken into consideration, said reactions being equal to:

$$V_x = \frac{V\varnothing}{\cos(\alpha)}$$

$$V_y = \frac{V\varnothing}{sen(\alpha)}$$

These vectors are added and reduced on the cosine of angle $\beta$ between tangent to the rotation circumference of crank 4, having the following angular coefficient:

$$\tan(\alpha + \frac{\pi}{2}) = -ctg(\alpha) = -\frac{\cos(\alpha)}{sen(\alpha)}$$

and the longitudinal axis of rigid element 5, having the following angular coefficient:

$$-\tan(\alpha) = -\frac{sen(\alpha)}{\cos(\alpha)}$$

Now, the formula to obtain the tangent of angle $\beta$ can be applied:

$$\tan(\beta) = \frac{-\dfrac{\cos(\alpha)}{sen(\alpha)} + \dfrac{sen(\alpha)}{\cos(\alpha)}}{1 + \dfrac{sen(\alpha)}{\cos(\alpha)} * \dfrac{\cos(\alpha)}{sen(\alpha)}} = \frac{sen^2(\alpha) - \cos^2(\alpha)}{2 * sen(\alpha) * \cos(\alpha)}$$

By simplification of the above, it is obtained:

$$\tan(\beta) = \frac{1}{2 * sen(\alpha) * \cos(\alpha)} - \frac{1}{\tan(\alpha)} = \frac{1}{sen(2\alpha)} - \frac{1}{\tan(\alpha)}$$

For an infinitesimal increase of the rotation of crank, we shall obtain:

$$dLT = ((V_x + V_y) * \cos(\beta))d\alpha$$

At the end, it will be possible to write:

$$\frac{LT}{2} = V\varnothing * \int_{\varnothing}^{\pi} \frac{1}{\cos(\alpha)} + \frac{1}{sen(\alpha)}) * \cos(\arctan(\frac{1}{sen(2\alpha)} - \frac{1}{\tan(\alpha)})))d\alpha$$

Multiplying the result for number 2, we shall obtain the same value of LT already obtained.

In order to demonstrate the elimination of all inertial stresses due to masses in a harmonic rectilinear motion in an operative machine employing the subject device along at least two orthogonal directrixes, we shall analyse an idle working machine and without taking into consideration the friction, i.e. limited to the parts creating the motion: shaft at a constant rotational rate, rigid element and movable elements.

Indicating by m the mass of each movable element, moving by a harmonic motion offset of $\pi/2$, the co-ordinates of the points running along the guide and valid for anomaly $\omega t$ are obtained:

$$X_o = 2 * R\varnothing * \cos(\omega t)$$

$$Y_v = 2 * R\varnothing * sen(\omega t)$$

Points runs at the speed:

$$X_o' = -\omega * 2 * R\emptyset * sen(\omega t)$$

$$Y_v' = \omega * 2 * R\emptyset * cos(\omega t)$$

having the acceleration:

$$X_o'' = -\omega^2 * 2 * R\emptyset * cos(\omega t)$$

$$Y_v'' = -\omega^2 * 2 * R\emptyset * sen(\omega t)$$

and the inertial forces aligned with the respective guide by the multiplication of acceleration with mass are obtained :

$$F_o(\omega t) = -m * \omega^2 * 2 * R\emptyset * cos(\omega t)$$

$$F_v(\omega t) = -m * \omega^2 * 2 * R\emptyset * sen(\omega t)$$

reducing vectors on tangent to the rotation circumference of crank axis, stresses which completely annul each other are obtained :

$$F_{mo}(\omega t) = -m * \omega^2 * 2 * R\emptyset * cos(\omega t) * sen(\omega t)$$

$$F_{mv}(\omega t) = m * \omega^2 * 2 * R\emptyset * sen(\omega t) * cos(\omega t)$$

In view of the perpendicularity between the two directrixes, it is easy to verify how it does not exist only one moment during the cycle where accelerations of movable element masses acts in accordance with crank. It is therefore admissible to change the sign of $F_v(\omega t)$.

The present invention has been described for illustrative but not limitative purposes according to its preferred embodiments, but it is to be understood that modifications and changes can be introduced by those skilled in the art without departing from the relevant scope as defined in the enclosed claims.

## Claims

1. Crank mechanism for the reversible transfer of mechanical energy by the transformation of rotary motion into reciprocating harmonic rectilinear motion and vice versa, characterised in that it comprises a member, axially constrained to a solid support, rotating about its longitudinal axis, at least a crank element, rigidly coupled with said member and having its longitudinal axis parallel and not coincident with respect to the axis of said rotating member, and means for the transformation of the rotating motion into reciprocating harmonic motion, and vice versa, said means being movable within the solid support, integral with said crank; to said means for the transformation of the rotating motion into rectilinear motion at least two movable elements being coupled.

2. Crank mechanism according to claim 1, characterised in that said at least two movable elements are suitable to run different reciprocating linear trajectories, with the same offset harmonic function of the rotation angle of the crank.

3. Crank mechanism according to one of the preceding claims, characterised in that said rotating member is made up of a one or two throw shaft.

4. Crank mechanism according to one of the preceding claims 1 -2, characterised in that said rotating member is made up of a cantilevered crank.

5. Crank mechanism according to one of the preceding claims, characterised in that said means for the transformation of the motion from rotating motion into reciprocating rectilinear motion, and vice versa, of the movable elements are made up of a rigid element, axially constrained to the crank, in said element being individuated at least two fixed different and not superimposable points, in case these points are projected on a plane orthogonal with respect to the longitudinal axis of the crank, said points being each one spaced apart from said axis of an amount corresponding to the rotation axis of the same crank.

6. Crank mechanism according to one of the preceding claims, characterised in that in correspondence of said fixed points, two pins are integral with the rigid element, said pins being placed side by side and acting on different and never interfering sliding planes, and having the longitudinal axis parallel with respect to the axis of the crank and incident on the relevant fixed point.

7. Crank mechanism according to one of the preceding claims, characterised in that providing within the sump constraints for the linear sliding of two movable elements, axially constrained with the respective pins, and the longitudinal sliding directrix of which intersects the rotation axis of the rotating member, making the crank rotating, said pins, according to a well known geometrical law, along with the respective movable elements, will make linear ranges corresponding to four times the rotation radius of the same crank, alternatively running along the linear sliding constraints, passing through positions defined by a harmonic function of the crank rotation angle, said positions being offset each other, each point being different and separated from the other similar points.

8. Crank mechanism according to one of the preceding claims, characterised in that said pins centred in the fixed points are sized in such a way that their peripheral circumference is outer with respect to and encompasses the radial section of the crank axially constrained to them.

9. Crank mechanism according to one of the preceding claims, characterised in that said rigid element is made up of an non deformable assembly of two or more partially superimposed and coupled on the faces pins, having the common surface sufficiently extended to guarantee for both the complete common housing of the axial constraint at the same crank.

10. Crank mechanism according to one of the preceding claims, characterised in that a single rigid element is comprised by each number of pins bigger than one, at least two of which being superimposable, considering the as identical, if projected on a plane normal with respect to the crank longitudinal axis.

11. Crank mechanism according to one of the preceding claims, characterised in that a crank element can be axially constrained to every number of rigid elements.

12. Crank mechanism according to one of the preceding claims, characterised in that a single rotating element supports every number of crank elements.

13. Generating or absorbing machine comprising one or more crank mechanisms according to the preceding claims.

14. Crank mechanism for transforming a rotative motion of given diameter into reciprocating motion having a double stroke, and vice versa, and machines comprising said mechanism, according to each one of the preceding claims, substantially as illustrated and described.

FIG. 1

FIG. 2

FIG. 3

EP 0 754 880 A2

FIG. 4a

FIG. 4b

EP 0 754 880 A2

FIG. 5a        FIG. 5b

EP 0 754 880 A2

13

FIG. 6

FIG. 7

FIG. 7(cont)

FIG. 8

FIG. 9

FIG. 10

EP 0 754 880 A2

FIG. 11a

EP 0 754 880 A2

FIG. 11b